# EUROPEAN PATENT APPLICATION

(11) **EP 1 028 312 A1**
(43) Date of publication of application: **16.08.2000**
(21) Application number: 00810111.5
(22) Date of filing: 09.02.2000
(51) Int. Cl.: G01N 21/25, G01N 21/27, G01N 35/02

(54) **Optical analysis device**

(30) Priority: 10.02.1999 US 247636
(71) Applicant: UMM Electronics, Inc., Indianapolis, Indiana 46250 (US)
(72) Inventor: Hutchison, James S., Indianapolis, Indiana 46219 (US); Riedel, Richard A., Carmel, Indiana 46032 (US)
(74) Representative: Ganguillet, Cyril

(57) **Abstract**

A method and apparatus for performing optical analyses. One form of the present invention is an optical assembly including a bank of collimated visible-spectrum LEDs shining onto an optical specimen through rectangular slits and also including and an optical detector adapted to detect the light returned by the specimen. The optical specimen thereby is imaged as a series of overlapping rectangles. In one form, the optical analysis device is controlled by a microprocessor capable of coordinating the optical analyses of the optical samples, calculating data points, and organizing and storing the data for later retrieval and including a user interface having a display function and a data input function.

## Description

### TECHNICAL FIELD OF THE INVENTION

The present invention relates generally to the field of optics, and more specifically to a colorimetric system for analyzing stationary specimens.

### BACKGROUND OF THE INVENTION

Colorimitric analysis or colorimetry is the technique by which an unknown color is evaluated in terms of known or standard colors, and has found great use in the fields of analytical chemistry and physics. Devices for performing colorimetric analysis of various test materials are well known in the art. One known method of colorimetric analysis involves shining a beam of light having known intensity and color or peak wavelength on a test specimen, and then transmitting or reflecting the beam to a sensor or photodetector. The degree of absorption of the light beam is then determined and then compared to an internal or external standard. From this measurement and comparison, the color and intensity of the unknown test specimen may be determined. The colorimetric measurement of an unknown is useful for determining, among other things, the concentrations of a known constituent in solution, the rate of an ongoing chemical reaction, and the identity of an unknown constituent.

Colorimetric analysis is commonly used as an analytical tool in the fields of physics and chemistry. Colorimetry is useful in investigating physical phenomena such as electrofluorescence and chemical phenomena such as qualitative and quantitative chemical analysis. One useful subgroup of chemical analysis is the medical qualitative and quantitative analysis of biological fluids.

Medical applications of colorimetry include transmissive and remissive chemistry analyses. Optical chemistry tests may be performed on biological fluid specimens treated with particular reagents. When the specimen and reagent fluids have been introduced into a partially transparent reaction well, a light beam having a known peak wavelength may be shined therein. Photodetectors can measure remission, or diffuse reflectance, from the specimen. The remission data may be used to conduct various optical analyses, including but not limited to analyses directed at lactic acid, ethanol, iron, iron binding capacity, glucose, cholesterol, carbon dioxide, and lipase.

Immunoassay and coagulation tests are transmission optical analyses that may be performed on test specimens in containers adapted to pass the colorimetric analysis beam therethrough to a detector. Colorimetric absorption measurements can be made by comparing the spectrums of the light beam before and after it passes through the specimen. Through measurements of light absorption, a technique such as enzyme multiplied immunoassay (EMIT) may be used to optically measure small molecules in solution. EMIT may be used to measure analytes such as digoxin, theophylline, phenytoin, thyroxine, valproic acid, gentamicin, tobramycin, and cyclosporin.

Another analytical mechanism that may be employed in a transmissive optical test is turbidity. Turbidity is the measure of the decrease in light passing through a specimen due to scatter, reflectance, and absorption. Turbidity may be used in such techniques as microparticle agglutination inhibition and direct microparticle agglutination to measure such analytes as those listed above regarding EMIT, as well as, but not limited to, human chorionic gonadotropin, troponin, myoglobin, prostate specific antigen, microalbumin and thyroid stimulating hormone.

Turbidity may also be used to measure coagulation. Coagulation times measurable by using turbidity in a transmissive optical test configuration include prothrombin time, activated partial thromboplastin time, fibrinogen time, and thrombin time. Coagulation tests are typically performed on stationary specimens.

One type of known colorimetric analyzer uses filters in conjunction with a broad-spectrum light source, such as an incandescent or fluorescent bulb, to produce beams of light having the desired color and intensity. These colorimeters require light sources capable of generating light intense enough to produce a filtered beam adequate to support colorimetry. Such sources are expensive and tend to run hot and burn out quickly. Furthermore, support assembly for storing and switching multiple filters is cumbersome.

Other colorimetric analyzers use multiple light emitting diodes (LEDs) feeding a common fiber-optic line to produce the colored light beams required to perform colorimetric analysis. The optical fibers integral to these systems are prone to breaking and smudging. The presence of optical fibers also introduces extra interfaces that must be maintained. Furthermore, it is difficult to quickly direct a fiber-optically transmitted beam quickly from one target specimen to another or to sweep the beam rapidly over a specimen surface.

None of the prior art colorimetric analyzers are well suited for analyzing optical specimens with non-uniform color distributions. The prior art analyzers produce light beams that illuminate only one part of the specimen, usually the center, and perform colorimetric analysis specific to that area. There is a need for a colorimetric analyzer capable of analyzing several specimens sequentially or simultaneously and capable of analyzing the entire surface of an optically asymmetric specimen. A means for satisfying these needs has so far eluded those skilled in the art.

### SUMMARY OF THE INVENTION

The present invention relates to an analysis method and apparatus for performing optical analyses. One form of the present invention is an optical assembly including a bank of collimated visible-spectrum LEDs shining onto an optical specimen through rectangular slits and also including and an optical detector adapted to detect the light returned by the specimen. The optical specimen is thereby imaged as a series of overlapping rectangles. In one form, the optical analysis device is controlled by a microprocessor capable of coordinating the optical analyses of the optical samples, calculating data points, and organizing and storing the data for later retrieval and including a user interface having a display function and a data input function.

One form of the present invention contemplates a combination comprising: alight-emitting diode array; a collimator array wherein each collimator includes a slit aligned with a respective one of the light emitting diodes; and a photodetector array positioned to indirectly receive light emitted from the slits, wherein the light emitted from the light emitting diodes is prevented from being directly transmitted to the photodetectors.

Another form of the present invention contemplates a combination comprising: a controller adapted to send signals to the light emitting diode array and receive signals from the photodetector array; a specimen adapted to be optically analyzed; a pair of white optical standards adapted to be optically analyzed; and a rastering mirror adapted to direct the light emitted from the slits to the specimen, wherein the mirror is adapted to direct the light back and forth across the specimen; wherein the light exiting the slits has a substantially rectangular cross section; wherein the light is flashed on the specimen as a series of overlapping rectangles; wherein the controller is adapted to average a plurality of received signals into one data point.

Still another form of the present invention contemplates a combination, comprising: a light emitting diode array; a collimator array aligned with the light emitting diode array, wherein each collimator opaquely covers a respective one of the diodes except for a transparent slit aligned therewith through which light may escape; a photodetector array positioned to receive light emitted from the diodes, wherein the light emitted from the diodes is prevented by the collimator array from being directly transmitted to the photodetectors; and a controller adapted to control the emission of light from the light emitting diode array and receive signals from the photodetector array generated by light striking the photodetectors.

Yet another form of the present invention contemplates a combination, comprising: a bank of discrete light sources ranging in output frequencies from about 400 nm to about 700 nm; a substantially flat test specimen; a plurality of collimators, each collimator aligned with a respective one of the light sources and adapted to pass light to the specimen and having a slit adapted to constrain the light passed therethrough into a beam; and an optical detector adapted to detect light emitted by the light sources and returning from the test specimen.

Still another form of the present invention contemplates a method, comprising the steps of: illuminating a first portion of a specimen; receiving a signal corresponding to the intensity of the illumination reflected from the specimen; illuminating a second portion of a specimen; receiving a signal corresponding to the intensity of the illumination reflected from the specimen; and averaging the signals. Yet another form of the present invention contemplates a method, comprising the steps of: sequentially illuminating a plurality of overlapping portions of a specimen; sequentially receiving signals corresponding to the intensity of the illumination reflected from the portions of the specimen; and averaging the signals.

Still another form of the present invention contemplates a method, comprising the steps of: providing a plurality of spatially separated white optical standards; sequentially optically sampling each standard; comparing the optical samples; generating an error message if the optical samples are not substantially identical.

One object of the present invention is to provide an improved optical analysis device.

Related objects and advantages of the present invention will be apparent from the following description.

### BRIEF DESCRIPTION OF THE DRAWINGS

FIG. 1a is an exploded view of the preferred embodiment of the present invention.

FIG. 1b is an exploded view of an alternate embodiment of the present invention.

FIG. 2 is an illustrative schematic of remissive optical analysis performed using the embodiment of FIG. 1a.

FIG. 3 is an illustrative schematic of transmissive optical analysis performed using the embodiment of claim 1a.

FIG. 4a is an illustrative schematic of remissive optical analysis performed by rastering the beam over a plurality of samples.

FIG. 4b is an illustrative schematic of remissive optical analysis performed by rastering the beam over a plurality of samples.

FIG. 5a is an illustrative schematic of transmissive optical analysis performed by rastering the beam over a plurality of samples.

FIG. 5b is an illustrative schematic of transmissive optical analysis performed by rastering the beam over a plurality of samples.

FIG. 6 is an illustrative schematic showing an imaging pattern of overlapping rectangles.

FIG. 7 is an illustrative schematic of a test specimen and a first and a second white standard.

FIG. 8 is an illustrative schematic of a light beam being directed to the specimens and standards of FIG. 7.

### DETAILED DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

One form of the present invention is an optical analysis system having an optical analysis unit. The analysis unit employs an optical read head aligned to analyze a specimen by reading transmitted or remitted light from an array of light emitting diodes (LEDs) adapted to emit a plurality of wavelengths. The optical analysis system analyzes the chemical reaction area or reaction well in a test cartridge by shining a beam of light onto the specimen and measuring the remission, the transmission, or both with an optical detector. During the optical analysis the beam may be continuously moving, periodically passing over the specimen. The optical analysis system looks at the specimen area as a series of small overlapping rectangles. Successive overlapping optical specimens are taken as the beam passes the specimen and illuminates it as a series of overlapping portions. For each pass all of these portions are averaged in order to generate a single composite value representing the total test specimen area. In this way, the specimen is not required to have a uniform shape or color, and several specimens may be simultaneously optically analyzed by careful control of the direction of the beam.

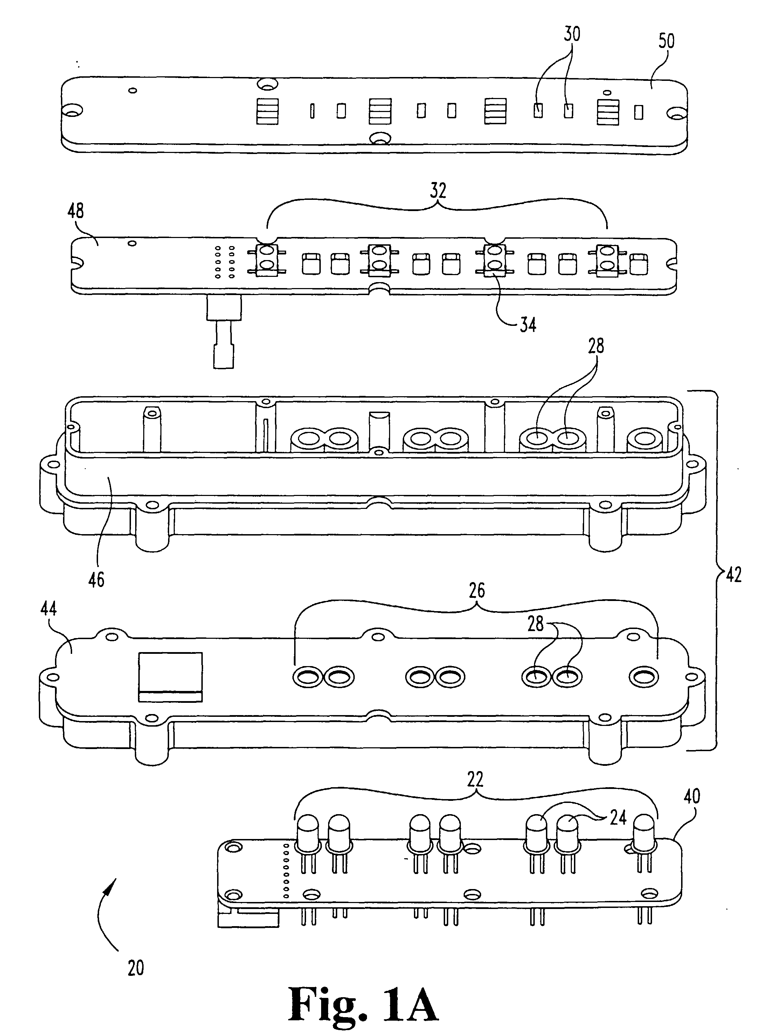

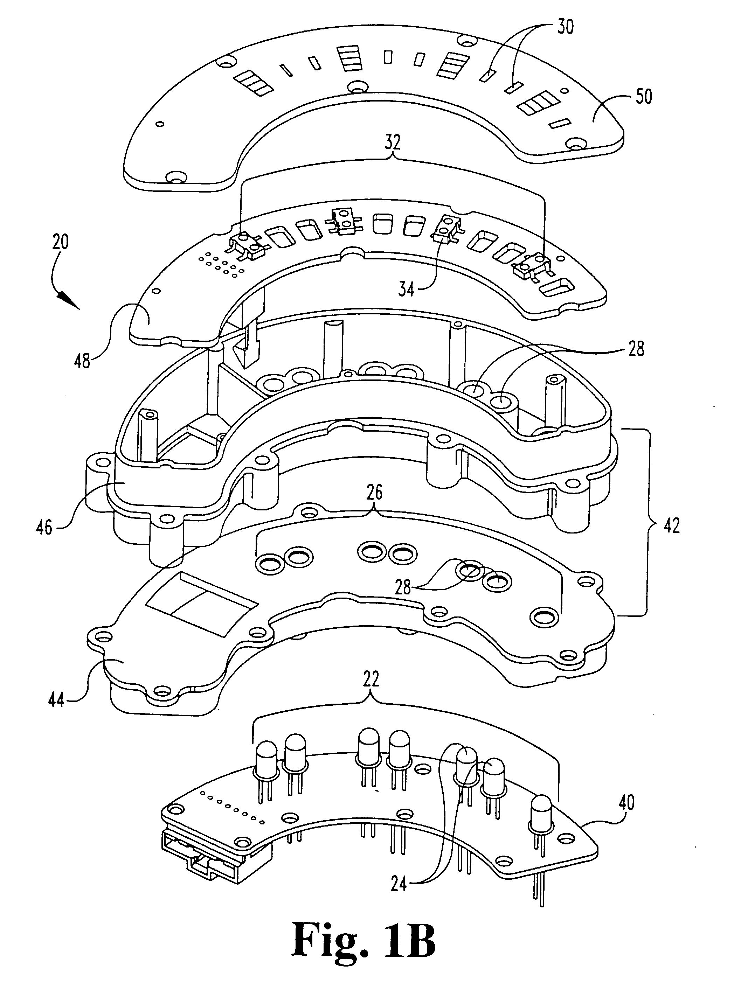

FIG. 1 illustrates the preferred embodiment of the optical analysis assembly 20. The optical analysis assembly 20 includes a light source array 22. The discrete, spatially separated light sources 24 that make up the light source array 22 are light emitting diodes or LEDs in the preferred embodiment. Each LED 24 has a separate predetermined peak emission wavelength. Each LED 24 therefore approximates a monochromatic light source, and can be considered to be substantially monochromatic.

A collimator array 26 is aligned with the LED array 22. Each LED 24 shines through a respectively aligned collimator 28. The collimator 28 terminates in a narrow slit 30. In this embodiment, the slit 30 is rectangular, although other slit shapes may be used to generate light beams having any desired cross-sectional geometry. The collimator 28 has sufficient length such that the emitted beam is substantially uniaxial with a rectangular cross-section.

The optical analysis assembly 20 also includes a light detector array 32. In the preferred embodiment, the light detectors 70 making up the light detector array 32 are photodiodes spaced between every other slit 30. Light from the LEDs 24 is prevented from shining directly on the photodiodes 70 by the respectively aligned collimators 28. In other embodiments, the light from the discrete light sources 24 may be prevented from shining directly on the light detectors 70 by any convenient orientation or opaque shield means.

The optical analysis assembly 20 of the preferred embodiment includes a bank 22 of seven LEDs 24 emitting radiation throughout the visible spectrum. The shape of the optical analysis assembly 20 in this embodiment is arcuate, although the optical analysis assembly may have any shape convenient to its application.

In operation, the optical analysis assembly 20 generates light from an LED 24. The light is channeled by the associated collimator 28 and emerges from the slit 30 as a beam having a substantially rectangular cross-section. The beam is then directed onto a test specimen (not shown) and then returned to a photodetector 70. The optical analysis assembly 20 may be used for optical remission (diffuse reflection) or optical transmission analyses, depending upon the configuration of the test specimen.

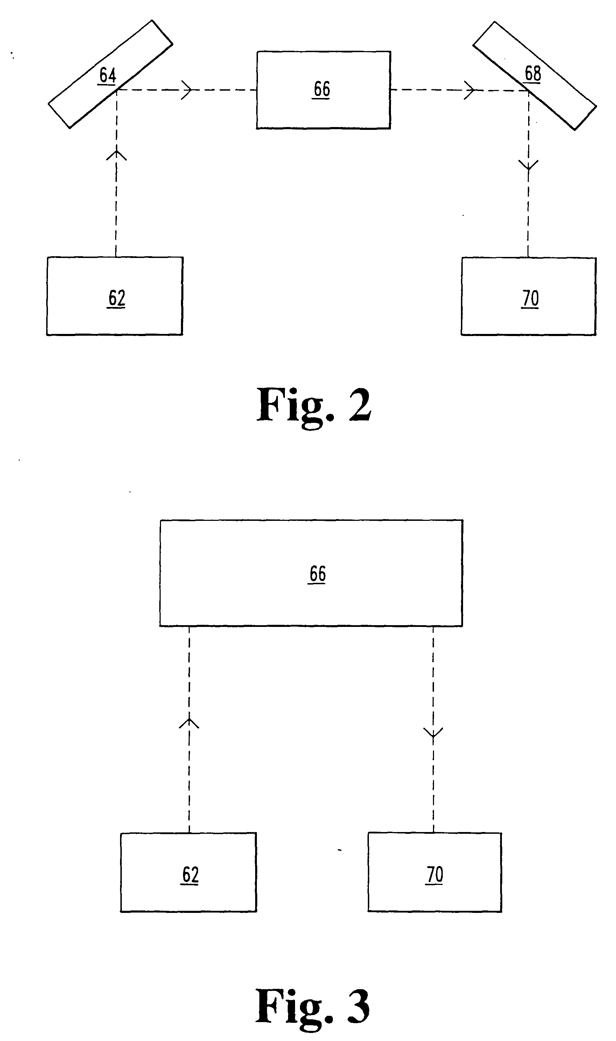

Transmission optical analysis is schematically represented by FIG. 2. Transmission optical analysis testing begins with a beam of substantially monochromatic light shining from the collimated light source 62. The beam leaving the collimated light source 62 is substantially uniaxial and has a rectangular cross section. The beam is directed by a first mirror 64 through an at least partially transparent specimen 66. The beam may be partially absorbed or scattered by the specimen 66. The beam is then directed by a second mirror 68 to a photodetector 70.

Remission, or diffuse reflection, optical analysis is schematically represented by FIG. 3. Remission optical analysis begins with a beam of substantially monochromatic light shining from the collimated light source 62. The beam leaving the collimated light source 62 is substantially uniaxial and has a rectangular cross section. The beam is directed to an optical specimen 66. The beam is diffusely reflected from the specimen 66 to a photodetector 70.

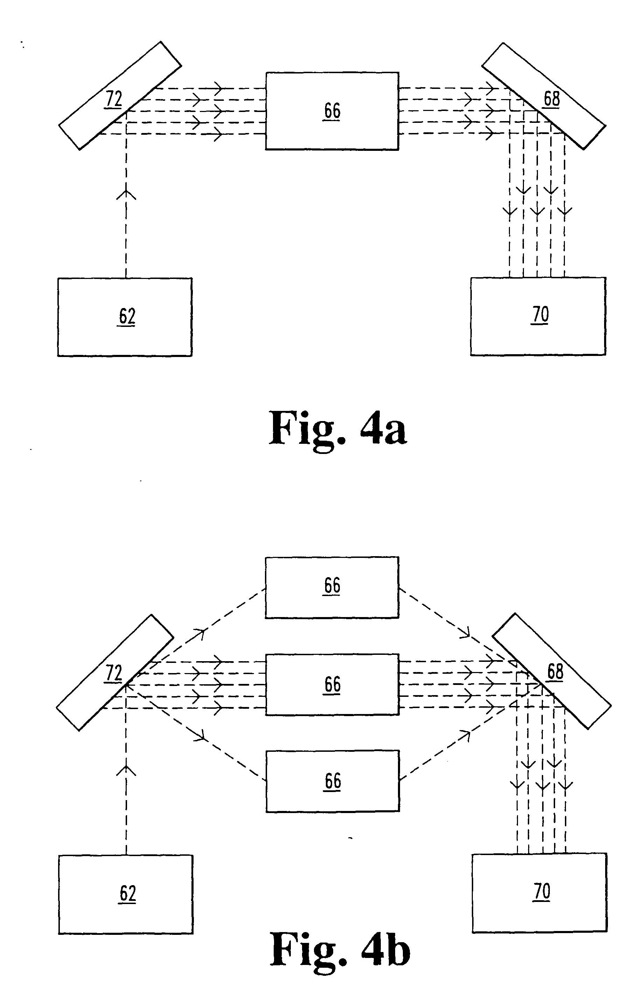

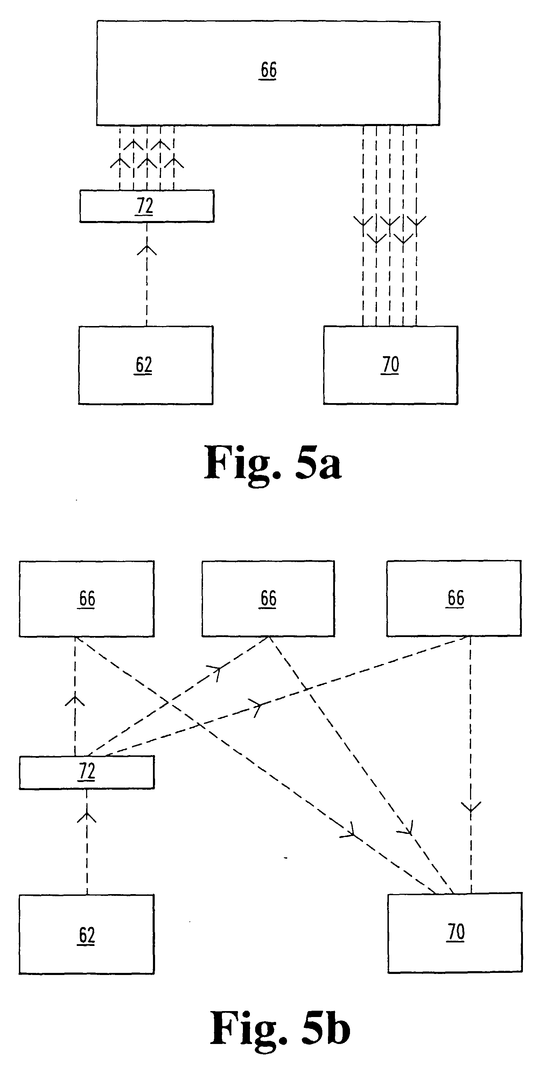

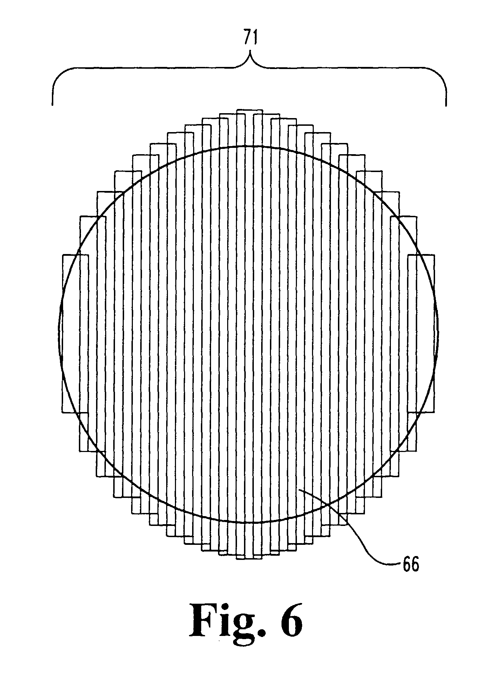

The photodiode light emitter 24 and detector elements 70 of this embodiment can be switched or pulsed at frequencies of about 20 kHz. The LEDs may be continuously illuminated or may be pulsed to emit flashes of light that may be directed to the test specimen as rectangular flashes. An optical test specimen may be sampled as a series of overlapping rectangular sections. As shown schematically in FIGs. 4a-b and 5a-b, the beam may be rastered over the optical specimen, and then returned to the photodetector. If the LEDs 24 are pulsed, the beam returns to the photodetector as a series of pulses and the specimen is imaged as a series of overlapping rectangles 71. (See FIG. 6) The data sampling rate from a single optical test specimen 66 may effectively be several hundred samples per each complete raster sweep of the specimen 66. The beam may be rastered over the test specimen 66 by moving the optical analysis array back and forth over one or more test specimens 66 (using a linear actuator motor or the like) or by introducing a movable mirror 72 into the optical path and using the mirror to direct the beam back and forth over the specimen or over a plurality of specimens. Alternatively, one or more specimens 66 may be passed linearly through the optical beam by means of a conveyor apparatus or the like. The LEDs 24 may be flashed in synchronization with the rastering or specimen 66 motion to produce a controlled and well-defined image of the test specimen 66. A microprocessor may be used to coordinate the rastering of the specimen 66 with the flashing of the LEDs 24 to produce a plurality of overlapping rectangular pulses 71 per raster pass of the light beam over the entire face of the specimen 66. The microprocessor may also be used to receive signals from the photodetectors 70 and average the intensity of the overlapping rectangular signals 71 generated each time the beam is rastered across the face of the test specimen 66 into one representational data point. In this way, a test specimen 66 having an irregular or color-varied surface may be colorimetrically analyzed, and/or a colorimetric analysis may be conducted to measure a change occurring in the specimen 66 over time.

FIGs. 4a and b schematically illustrate using a rastered light beam to conduct transmission optical analysis. In Fig 4a, a light beam travelling from a collimated LED 62 strikes a rastering mirror assembly 72. The rastering mirror assembly 72 reflects the beam through specimen 66, directing the beam back and forth through the specimen 66. The beam is redirected by second mirror 68 to a photodetector 70. The rastering mirror assembly 72 may be controlled by a microprocessor. The microprocessor may be used to coordinate the rastering mirror assembly 72 and receive signals from the photodetector 70.

Fig 4b schematically illustrates using a rastered light beam to conduct transmission optical analyses on a plurality of specimens 66. The light beam from the collimated light LED 62 travels to the rastering mirror 72, where it is sequentially redirected through a plurality of separate specimens 66. After passing through a specimen 66, the beam is then redirected by a second mirror 68 to a photodetector 70. The rastering mirror assembly 72 may be controlled by a microprocessor, which can also receive signals from the photodetector 70. The microprocessor may be used to coordinate the signals from the photodetector 70 with each separate specimen 66.

FIGs. 5a and b schematically illustrate using a rastered beam to conduct remissive optical analyses. In FIG. 5a, a beam from a collimated LED 62 is reflected from a rastering mirror assembly 72 to a test specimen 66. The beam is swept back and forth across the test specimen 66. The beam is reflected from the test specimen 66 to a photodetector 70. The LEDs 24 may be flashed at a rate such that the beam illuminates the test specimen 66 as a series of overlapping rectangles 71. A microprocessor may be used to control the rate at which the LEDs 24 are flashed and the beam is swept over the specimen 66. The microprocessor may also be used to receive signals from the photodetector 70 and average the signals from the overlapping rectangles 71 into one data point for each time the beam completes one sweep of the test specimen 66.

FIG. 5b schematically illustrates using a rastered beam to conduct remissive optical analyses on a plurality of test specimens 66. The light beam from the collimated LED 62 travels to the rastering mirror 72, where it is sequentially redirected to a plurality of separate specimens 66. The beam is diffusely reflected from a specimen 66 back to a photodetector 70. The rastering mirror assembly 72 may be controlled by a microprocessor, which can also receive signals from the photodetector 70. The microprocessor may be used to coordinate the signals from the photodetector 70 with each separate specimen 66.

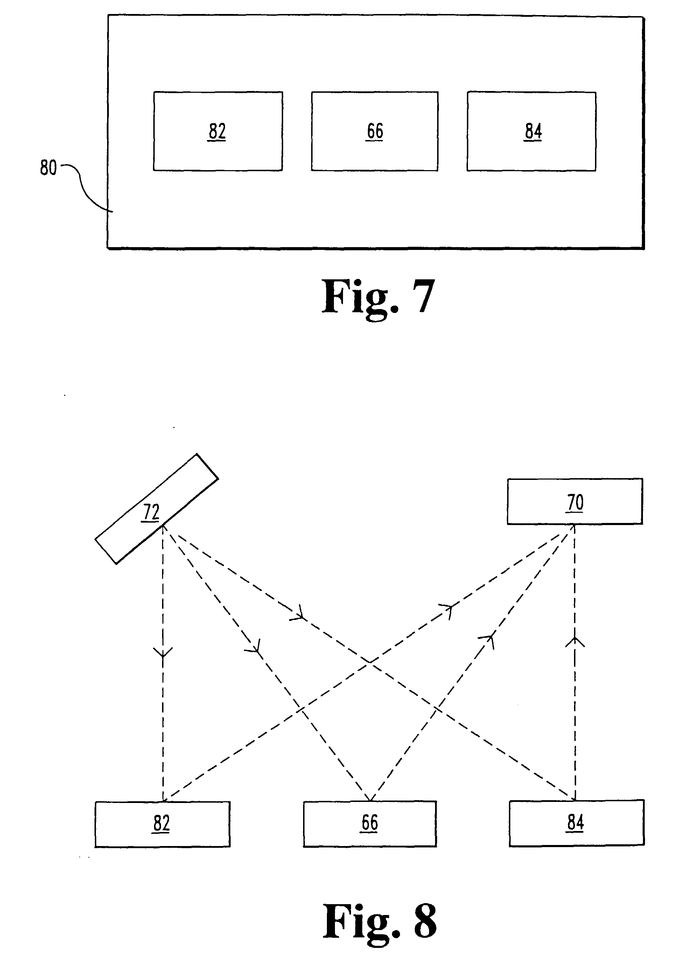

The present invention also includes a plurality of white optical standards 82, 84 mounted near the optical specimen 66, as illustrated in FIGs. 7 and 8. In the preferred embodiment, there are two white optical standards 82, 84 mounted adjacent the test specimen 66, although in other embodiments more white standards 82, 84 may be used. In operation, the light beam is directed from the rastering mirror assembly 72 to the first white standard 82, and reflected therefrom to the photodetector array 70. The beam is then directed to the second white standard 84, and again reflected to the photodetector array 70. The electrical output of the photodetector may be compared to both measure the baseline intensity of the incident beam. The integrity of each white standard 82, 84 is also measured by comparison. The comparison check allows an operator to discover if one of the white standards 82, 84 has become damaged or dirty and prevents an erroneous beam intensity calibration form confounding the data, allowing measurements taken at different times and under different conditions to be comparable.

In one contemplated embodiment, the light sources 62, the rastering means, and the light detectors 70 are operationally coupled to a microprocessor. The light sources 62 are actuated by the microprocessor, and can be pulsed. The microprocessor can coordinate the pulsing of the light sources with the speed at which the rastering means sweeps the beam over the specimen 66 in order to control the number and degree of overlap of the overlapping rectangles 71 illuminating the specimen 66. The microprocessor also receives the electronic impulses from the light detectors 70 representing the intensity of the light beam returned from the specimen 66. The microprocessor can average the signals from each raster pass of the beam into a single representative data point.

In this embodiment, the light sources 62 comprise bank 22 of seven LEDs 24 (See FIG. 1) with peak light emissions at about 425 nm, 505 nm, 570 nm, 590 nm, 615 nm, and 655 nm. The photodetectors 34 are arranged alternately with the LEDs 24.

In another contemplated embodiment, the LED and collimator arrays 22, 26 are mounted under a rotatable turntable (not shown). An array of light detectors 32 is also mounted below the turntable. The collimated light beam generated therefrom is directed to a stationary specimen (not shown), where it can be either transmitted through the specimen and reflected to the light detector array 32 or diffusely reflected from the specimen to the light detector array 32. The beam may be rastered across the specimen as a series of overlapping shapes. A rastering means such as, but not limited to, a movable mirror system may be used to direct the beam back and forth across the face of the specimen. The specimen may be presented in a test cartridge having a semi-transparent reaction well adapted for remission and/or transmission optical analysis.

While the invention has been illustrated and described in detail in the drawings and foregoing description, the same is to be considered as illustrative and not restrictive in character, it being understood that only the preferred embodiments have been shown and described and that all changes and modifications that come within the spirit of the invention are desired to be protected.

## Claims

1. An optical analysis assembly comprising, in combination:
a light emitting diode array;
a collimator array wherein each collimator includes a slit aligned with a respective one of the light emitting diodes; and
a photodetector array positioned to indirectly receive light emitted from the slits, wherein the light emitted from the light emitting diodes is prevented from being directly transmitted to the photodetectors.

2. The optical analysis assembly of claim 1 wherein the diodes emit light at peak wavelengths ranging from about 400 nm to about 700 nm.

3. The optical analysis assembly of claim 1 wherein the slit is rectangular and wherein a light beam emitted therefrom has a substantially rectangular cross-section.

4. The optical analysis assembly of claim 1 further comprising a rastering mirror adapted to direct the light beam back and forth.

5. The optical analysis assembly of claim 1 further comprising a specimen adapted to be optically analyzed.

6. The optical analysis assembly of claim 1 wherein the photodetector array comprises photodiodes positioned between the collimator slits.

7. The optical analysis assembly of claim 1 further comprising a pair of white optical standards adapted to be optically analyzed.

8. The optical analysis assembly of claim 6 wherein an angle defined by the slit, the specimen, and the detector is about 45 degrees.

9. The optical analysis assembly of claim 5, further comprising a linear actuator motor adapted to move the optical analysis assembly back and forth with respect to the specimen.

10. The optical analysis assembly of claim 5 further comprising a plurality of specimens defining an array positioned to be sequentially optically analyzed, wherein the rastering mirror is adapted to direct the beam sequentially across each specimen in the array.

11. The optical analysis assembly of claim 5 further comprising a turntable adapted to hold a plurality of specimens and further adapted to sequentially stationarily present each specimen to the optical analysis assembly.

12. The optical analysis assembly of claim 5 further comprising a conveyor adapted to hold at least one specimen and further adapted to linearly present the specimen to the optical analysis assembly at a predetermined rate of speed.

13. The optical analysis assembly of claim 5 further comprising a controller adapted to send signals to the light emitting diode array and to receive signals from the photodetector array, wherein the controller is further adapted to average a plurality of signals into one data point.

14. The optical analysis assembly of claim 1 further comprising:
a controller adapted to send signals to the light emitting diode array and receive signals from the photodetector array;
a specimen adapted to be optically analyzed;
a pair of white optical standards adapted to be optically analyzed; and
a rastering mirror adapted to direct the light emitted from the slits to the specimen, wherein the mirror is adapted to direct the light back and forth across the specimen;
wherein the light exiting the slits has a substantially rectangular cross section;
wherein the light is flashed on the specimen as a series of overlapping rectangles; and
wherein the controller is adapted to average a plurality of received signals into one data point.

15. An optical analysis assembly comprising, in combination:
a light emitting diode array;
a collimator array aligned with the light emitting diode array, wherein each collimator opaquely covers a respective one of the diodes except for a transparent slit aligned therewith through which light may escape;
a photodetector array positioned to receive light emitted from the diodes, wherein the light emitted from the diodes is prevented by the collimator array from being directly transmitted to the photodetectors; and
a controller adapted to control the emission of light from the light emitting diode array and receive signals from the photodetector array generated by light striking the photodetectors.

16. The assembly of claim 15 further comprising a specimen adapted to be optically analyzed and wherein the array of light emitting diodes is adapted to emit light at predetermined peak wavelengths.

17. The assembly of claim 16 wherein each photodetector is adapted to optimally detect light at the predetermined peak wavelengths.

18. The assembly of claim 17 wherein the light from a light emitting diode is diffusely reflected from the specimen to a respective photodetector and wherein the controller is adapted to compare the intensity of the light emitted from the diode to the intensity of the light reflected from the specimen.

19. The assembly of claim 17 wherein light from a light emitting diode is transmitted through the specimen to a respective photodetector and wherein the controller is adapted to compare the intensity of the light emitted from the diode to the intensity of the light transmitted through the specimen.

20. The assembly of claim 19 further comprising a plurality of specimens mounted on a rotatable turntable, wherein the specimens are sequentially rotated into a position such that the light from the light emitting diode array is transmitted therethrough to the photodetector array.

21. The assembly of claim 15 further comprising a stationary platform adapted to hold an optical specimen.

22. The assembly of claim 15 further comprising a stationary platform adapted to hold an optical specimen.

23. The assembly of claim 15 further comprising a pair of white optical standards adapted to be optically analyzed.

24. The assembly of claim 23 further comprising a mirror assembly adapted to selectively redirect the light emitted from the light emitting diode array to the specimens and white standards and further adapted to move the light back and forth over the specimens and white standards, wherein the controller is adapted to send signals to the mirror assembly.

25. The assembly of claim 23 further comprising a means for selectively redirecting light emitted from the light emitting diode array to the specimens and white standards and for moving the light back and forth over the specimens and white standards.

26. An optical analysis assembly, comprising:
a bank of discrete light sources ranging in output frequencies from about 400 nm to about 700 nm;
a substantially flat test specimen;
a plurality of collimators, each collimator aligned with a respective one of the light sources and adapted to pass light to the specimen and having a slit adapted to constrain the light passed therethrough into a beam; and
an optical detector adapted to detect light emitted by the light sources and returning from the test specimen.

27. The assembly of claim 26 further comprising means for rastering the light over the specimen;
wherein the optical detector can sample at least 100 overlapping rectangular sections of the test specimen each time the light beam passes over the specimen.

28. The assembly of claim 26 further comprising means for linearly translating at least one specimen through the light beam;
wherein the optical detector can sample at least 100 overlapping rectangular sections of the test specimen each time the light beam passes over the specimen.

29. The assembly of claim 26 further comprising control means for transceiving signals with the optical detector and with an operator;
wherein the control means actuates the optical detector and receives and stores data therefrom.

30. The assembly of claim 27 further comprising a pair of white optical standards adapted to be optically sampled.

31. A method of analyzing an optical specimen comprising:
a) illuminating a first portion of a specimen;
b) receiving a signal corresponding to the intensity of the illumination reflected from the specimen;
c) illuminating a second portion of a specimen;
d) receiving a signal corresponding to the intensity of the illumination reflected from the specimen; and
e) averaging the signals.

32. The method of claim 31, wherein the test specimen is loaded into a test cartridge.

33. A method of optically analyzing a sample comprising the steps of:
a) sequentially illuminating a plurality of overlapping portions of a specimen;
b) sequentially receiving signals corresponding to the intensity of the illumination reflected from the portions of the specimen; and
c) averaging the signals.

34. A method of calibration comprising the steps of:
a) providing a plurality of spatially separated white optical standards;
b) sequentially optically sampling each standard;
c) comparing the optical samples;
d) generating an error message if the optical samples are not substantially identical.
